# EUROPÄISCHE PATENTSCHRIFT

(11) **EP 1 604 863 B1**
(45) Veröffentlichungstag und Bekanntmachung des Hinweises auf die Patenterteilung: **04.05.2011**
(21) Anmeldenummer: 05011649.0
(22) Anmeldetag: 31.05.2005
(51) Int. Cl.: B60N 2/36, B60N 2/22

(54) **Vorrichtung zur Halterung einer Lehne eines Fahrzeugsitzes**
Device for holding the backrest of a motor vehicle seat
Dispositif pour maintenir le dossier d'un siège de véhicule automobile

(30) Priorität: 09.06.2004 DE 102004027910
(43) Veröffentlichungstag der Anmeldung: 14.12.2005
(73) Patentinhaber: BÖCO Böddecker & Co. GmbH & Co. KG, 42327 Wuppertal (DE); Bayerische Motoren Werke Aktiengesellschaft, 80809 München (DE)
(72) Erfinder: Trömer, Michael, 83626 Valley (DE); Kammler, Michael, 58285 Gevelsberg (DE); Eckart, Sven, 42327 Wuppertal (DE)
(74) Vertreter: Ostriga, Sonnet, Wirths & Roche

(56) Entgegenhaltungen:
- DE-A- 4 329 634
- DE-A1- 3 531 992
- DE-A1- 19 915 315
- DE-C- 128 272
- DE-C1- 19 836 919
- FR-A- 2 532 595
- FR-A- 2 789 635
- GB-A- 1 553 015

## Beschreibung

Die Erfindung betrifft eine Vorrichtung zur Halterung einer Lehne eines Fahrzeugsitzes, insbesondere einer Kfz-Fond-Lehne, in wenigstens zwei unterschiedlichen Neigungspositionen gemäß dem Oberbegriff des Anspruches 1.

Eine Lehne eines Fahrzeugsitzes ist bei bestimmten Fahrzeugmodellen zwischen einer ersten Neigungsposition, die man als Komfortposition bezeichnet, und die von der Lehne üblicherweise dann eingenommen wird, wenn sich auf dem Fond-Sitz wenigstens ein Fahrgast befindet, und einer zweiten Neigungsposition verlagerbar. In der zweiten Neigungsposition ist die Lehne z.B. im Wesentlichen vertikal aufgestellt und kann auf diese Weise den Fahrzeug-Laderaum, der sich in Fahrtrichtung hinter der Lehne anschließt, vergrößern. Auf diese Weise kann größeres, besonders sperriges Ladegut, wie Getränkekisten, Koffer od. dgl., in dem Laderaum untergebracht werden, was bei in Komfortposition befindlicher Lehne nicht möglich ist. Die zweite, im Wesentlichen vertikale oder gegebenenfalls auch in Fahrtrichtung nach vorne verschwenkte Neigungsposition der Lehne wird auch als Cargo-Position bezeichnet.

Üblicherweise befindet sich im Bereich des Lehnenkopfes ein lehnenseitig fest angeordnetes Schloss, welches mit einem axial langgestreckt ausgebildeten Kopplungselement kooperiert. Das Kopplungselement weist an seinem dem Schloss zugewandten Ende ein Schließbügelelement auf, welches von dem Schloss gehalten werden oder von dem Schloss freigegeben werden kann. Das Kopplungselement verbindet für den Fall, dass das Schloss das Schließbügelelement fängt, die Lehne mit einer fahrzeugseitig, also karosserieseitig, fest angeordneten Befestigungsstelle.

Die Lehne soll sowohl in ihrer Komfortposition als auch in ihrer Cargo-Position von dem Kopplungselement fahrzeugseitig gehalten oder gesichert werden, so dass beispielsweise im Falle eines Fahrzeug-Crashs verhindert wird, dass im Laderaum angeordnete Gegenstände in die Fahrgastzelle eindringen können. Das Kopplungselement wirkt somit nach Art eines Ankers.

Üblicherweise sind bei den bekannten Vorrichtungen Betätigungselemente vorgesehen, die infolge ihrer Betätigung eine Verschwenkung der Lehne von ihrer Komfortposition in ihre Cargo-Position und umgekehrt erlauben. Die Betätigungselemente entriegeln typischerweise das Kopplungselement von der fahrzeugseitigen Befestigungsstelle und erlauben eine Verschwenkung der Lehne in die Cargo-Position. In der Cargo-Position findet eine erneute Verriegelung des Kopplungselementes mit der fahrzeugseitigen Befestigungsstelle statt. Weitere Betätigungselemente oder zusätzliche Funktionen an demselben Betätigungselement können vorgesehen sein, um das lehnenseitige Schloss von dem Kopplungselement vollständig zu lösen, beispielsweise für den Fall, dass die Fahrzeuglehne vollständig in Fahrtrichtung nach vorne verschwenkt werden soll und eine im Wesentlichen horizontale, also flachliegende Position einnehmen soll, in der sie auf die Sitzfläche aufgeklappt ist, so dass sich der Kfz-Laderaum in die Fahrgastzelle hinein erstreckt.

Von besonderer Problematik ist bei der Konstruktion der Vorrichtung, dass infolge einer Verschwenkung der Lehne aus ihrer Komfortposition in ihre Cargo-Position der Lehnenkopf eine Bewegung entlang einer Kreisbahn durchläuft. Das Kopplungselement, welches die fahrzeugseitig fest angeordnete Befestigungsstelle mit dem Lehnenkopf verbindet, muss daher in der Lage sein, der Kreisbewegung des lehnenkopfseitig fest angeordneten Schlosses folgen zu können.

Hierzu ist es bereits angedacht worden, Führungen vorzusehen, die eine Krümmung aufweisen, die dem Verlauf der Kreisbahn des Lehnenkopfes entsprechen. Eine derartige Vorrichtung ist beispielsweise aus der DE 199 15 315 C1 bekannt. Die Bauweise der bekannten Vorrichtung ist sehr aufwändig, da eine verhältnismäßig groß dimensionierte Führung erforderlich ist.

Aus der GB-A-1 553 015 geht eine Verstellvorrichtung für eine neigungsverstellbare Fahrzeuglehne hervor, bei der ein Kurbelelement in Lagern im Bereich eines Lehnenkopfes drehbar gelagert ist. Mit den beiden äußeren Endbereichen ist die Kurbel in Schwenklagerstellen in der Fahrzeugseitenwand drehgelagert. Zur Durchführung einer Lehnenverschwenkung führt die Kurbel eine Schwenkbewegung durch. Eine axiale Verlagerbarkeit der Kurbel ist nicht gegeben.

Aus der FR-A-2 532 595 ist eine neigungsverstellbare Sitzlehne bekannt, die in unterschiedlichen Neigungspositionen arretiert werden kann. Es sind zwei schwenkbare Klauenarme vorgesehen, die jeweils um eine eigene Schwenkachse schwenkbar sind und wahlweise mit dem karosserieseitig fest angeordneten Bolzen in Kontakt gebracht werden können. Eine axiale Verlagerbarkeit eines Kopplungselementes ist in dieser Schrift nicht beschrieben.

Aus der DE 43 29 634 A die eine Vorrichtung mit den Merkmalen des Oberbegriffs des Anspruchs 1 zeigt, geht eine Rückenlehnen-Verriegelung hervor, bei der sowohl eine Lasche um eine erste Achse B als auch ein Riegelelement um eine zweite Achse A geschwenkt werden können. Hieraus ist es nicht bekannt, dass die fahrzeugseitige Befestigungsstelle eine Anlageebene für das Kopplungselement bereitstellt, wobei das Kopplungselement in Folge einer Verschwenkung der Lehne relativ zu der Anlageebene kippbar ist.

Aus der DE 197 17 205 A1, von der die Erfindung ausgeht, geht eine gattungsgemäße Vorrichtung hervor, die ebenfalls ein aufwändig ausgestaltetes Kopplungselement aufweist. Das Kopplungselement umfasst ein erstes, hinteres Schwenkteil 5, welches um eine fahrzeugseitig fest angeordnete Schwenkachse 6 schwenkbar an der Karosserie 7 des Fahrzeuges angeordnet ist. Ein zweites, vorderes Schwenkteil 4 ist teleskopartig relativ zu dem hinteren Schwenkteil 5 verlagerbar angeordnet. Das zweiteilige Kopplungselement ist auf diese Weise in Axialrichtung verlängerbar beziehungsweise verkürzbar ausgestaltet und zugleich um die fahrzeugseitig fest angeordnete Schwenkachse 6 schwenkbar.

Ausgehend von diesem Stand der Technik, liegt die Aufgabe der Erfindung darin, eine Vorrichtung gemäß dem Oberbegriff des Anspruches 1 derart weiterzubilden, dass sie eine einfachere Bauweise ermöglicht.

Die Erfindung löst diese Aufgabe mit den Merkmalen des Anspruches 1.

Das Prinzip der Erfindung besteht im Wesentlichen darin, auf eine fahrzeugseitig fest angeordnete Schwenkachse und auf eine Teleskopführung zu verzichten. Stattdessen schlägt die Erfindung ein fliegend gelagertes Kopplungselement vor, welches einstückig ausgebildet sein kann. Eine fliegende Lagerung im Sinne der Erfindung bedeutet eine lose Lagerung des Kopplungselementes in einer fahrzeugseitigen Befestigungsstelle. Das Kopplungselement ist relativ zu der Befestigungsstelle axial verlagerbar und auch um einen bestimmten Winkel schwenkbar oder kippbar, so dass ein Endbereich des Kopplungselementes, z.B. ein Schließbügel, dem lehnenseitigen, beispielsweise im Bereich des Lehnenkopfes angeordneten Schloss, während einer Verschwenkung der Lehne folgen kann. Die Befestigungsstelle bildet auf diese Weise ein Dreh-Gleitlager für das Kopplungselement aus. Ein derartiges Dreh-Gleitlager ermöglicht eine Axialverlagerung des Kopplungselementes und eine Verschwenkung relativ zu der fahrzeugseitig fest angeordneten Befestigungsstelle.

Der Begriff fliegende Lagerung im Sinne der Erfindung bedeutet aber auch, dass eine Bauweise getroffen ist, die eine Bewegung des Kopplungselementes innerhalb eines vorherbestimmten Bewegungsbereiches ermöglicht. So kann beispielweise eine Verschwenkung um einen größeren Winkel, als er infolge einer Verschwenkbewegung der Lehne benötigt wird, unter Umständen verhindert werden.

Auch ist der Formulierung Dreh-Gleitlager oder fliegende Lagerung zuzuschreiben, dass eine Begrenzung der Freiheitsgrade der Bewegung des Kopplungselementes relativ zu der fahrzeugseitigen Befestigungsstelle vorgesehen ist. Beispielsweise kann eine derartige Begrenzung von Freiheitsgraden durch eine Käfiganordnung erfolgen, die später erläutert wird.

Mit der erfindungsgemäßen Vorrichtung wird eine besonders einfache Konstruktion möglich, da lediglich noch zwei Anlageflächen erforderlich sind, die eine Anlageebene für das Koppelelement definieren. Relativ zu dieser Anlageebene kann das Koppelelement verlagerbar, insbesondere axial verlagerbar, und um einen gewissen Winkel kippbar oder schwenkbar ausgestaltet sein. Von besonderer Bedeutung kann in diesem Zusammenhang sein, dass das Kopplungselement sowohl in seiner Ruheposition, in der sich die Lehne in ihrer Komfortposition befindet, als auch in seiner Gebrauchsposition, in der sich die Lehne in ihrer Cargo-Position befindet, an der Anlagefläche anliegt oder zumindest im Wesentlichen entlang der Anlagefläche ausgerichtet ist. Dies ermöglicht eine besonders raumsparende Bauform.

Aufgrund der fliegenden Lagerung des Kopplungselementes kann des Weiteren ein Ruhighalter vorgesehen sein, der das Kopplungselement gegen die Anlagefläche oder hin zu der Anlagefläche beaufschlagt. Dies ermöglicht eine spielfreie Lagerung des Kopplungselementes und damit eine spielfreie Halterung der Lehne, die ungewünschte Geräusche unterdrückt. Der Ruhighalter kann z.B. von einem gesonderten, beispielsweise federbelasteten Element gebildet sein. Im einfachsten Fall kann der Ruhighalter in Form eines Niederhalters ausgebildet sein und unmittelbar mit einer Außenfläche des Kopplungselementes zusammenwirken und das Kopplungselement gegen die Anlagefläche drücken. Es ist aber auch möglich, den Ruhighalter durch ein Sperrelement bereitzustellen, welches das Kopplungselement in seiner jeweiligen Halteposition (Ruheposition oder Gebrauchsposition) fahrzeugseitig sichert. In dem letzteren Fall wird der Ruhighalter indirekt von dem Sperrelement gebildet, wobei dem Sperrelement neben seiner Sperrfunktion auch noch eine Ruhigstellungsfunktion zukommt.

Gemäß der Erfindung weist die fahrzeugseitige Befestigungsstelle wenigstens eine erste Anlagefläche und eine zweite Anlagefläche auf, die gemeinsam eine Anlageebene für das Kopplungselement bereitstellen. Die fahrzeugseitige Befestigungsstelle kann auf diese Weise denkbar einfach ausgebildet werden und erfordert lediglich zwei Anlageflächen, die voneinander beabstandet sein können. Die Anlageflächen stellen eine Anlageebene für das Kopplungselement bereit, an die das Kopplungselement anlegbar ist. Vorteilhafterweise liegt das Kopplungselement sowohl bei in Komfortposition als auch bei in Cargo-Position befindlicher Lehne an der Anlageebene an.

Die beiden Anlageflächen sind dabei derart dimensioniert, dass ihr Abstand voneinander geringer ist als die Länge des Kopplungselementes. Die Anlageflächen können beispielsweise von zwei in Fahrtrichtung im Wesentlichen quer verlaufenden Traversenelementen, die z.B. einer Käfiganordnung zugeordnet sind, gebildet sein.

Alternativ besteht auch die Möglichkeit, die Anlageebene von einer durchgehenden Anlagefläche bereitzustellen, so dass in diesem Falle die erste und die zweite Anlagefläche ineinander übergehen.

Gemäß der Erfindung ist das Kopplungselement infolge einer Verschwenkung der Lehne entlang der Anlageebene verlagerbar und relativ zu der Anlageebene kippbar. Diese Ausgestaltung der Erfindung ermöglicht besonders einfache Ausgestaltung eines erfindungsgemäßen Dreh-Gleitlagers.

Gemäß einer vorteilhaften Ausgestaltung der Erfindung ist das Kopplungselement einstückig ausgebildet. Dies ermöglicht eine besonders einfache Bauweise.

Gemäß einer weiteren vorteilhaften Ausgestaltung der Erfindung ist das Kopplungselement axial langgestreckt ausgebildet. Dies ermöglicht eine weiter vereinfachte Bauform.

Gemäß einer weiteren vorteilhaften Ausgestaltung der Erfindung ist das Kopplungselement fahrzeugseitig fliegend gelagert. Dies ermöglicht ein Kopplungselement, welches eine Axialerstreckung aufweist, die die Dicke der Lehne übersteigt. Denkbar ist alternativ aber auch, dass das Kopplungselement lehnenseitig fliegend gelagert ist.

Gemäß einer weiteren vorteilhaften Ausgestaltung der Erfindung weist das Kopplungselement ein erstes, der Lehne zugewandtes Ende auf, welches mit einem Schließelement, insbesondere einem Schließbügel ausgestattet ist, das mit einem lehnenseitigen Gegenschließelement zusammenwirkt. Das Gegenschließelement ist insbesondere Bestandteil eines lehnenseitig fest angeordneten Schlosses, und kann beispielsweise von einer lehnenschlossseitigen Drehfalle gebildet sein. Diese Ausgestaltung der Erfindung ermöglicht einerseits eine besonders einfache Bauweise, da das Schließelement mit nur geringem Aufwand mit dem Kopplungselement verbunden werden kann. Andererseits kann das Kopplungselement auf einfache Weise auch schwenkbar relativ zu der Lehne mit der Lehne verbunden sein. Eine derartige Schwenkbeweglichkeit zwischen dem Kopplungselement und dem lehnenseitigen Gegenschließelement bietet den Vorteil, dass der Winkelbereich, innerhalb dem das Kopplungselement in dem Dreh-Gleitlager schwenkbar ist, gering gehalten werden kann.

Schließlich bietet die Ausgestaltung auch die Möglichkeit, das lehnenseitige Gegenschließelement betätigbar auszugestalten, so dass eine Lösung der Lehne von dem Kopplungselement möglich ist, falls die Lehne in ihre im Wesentlichen horizontale Position verlagert werden soll.

Gemäß einer weiteren vorteilhaften Ausgestaltung der Erfindung weist die Lehne eine erste Neigungsposition (Komfortposition) auf, in der das erste Ende des Kopplungselementes der Befestigungsstelle näher ist als bei in einer zweiten Neigungsposition (Cargo-Position) befindlicher Lehne. Diese Ausgestaltung der Erfindung berücksichtigt eine geometrische Anordnung derart, dass die Befestigungsstelle in Fahrtrichtung hinter der Lehne angeordnet ist. Den beiden unterschiedlichen Neigungspositionen der Lehne, in denen diese arretiert fahrzeugseitig gehalten werden soll, sind somit zwei unterschiedliche Axialpositionen (Ruheposition und Gebrauchsposition) des Kopplungselementes relativ zu der Befestigungsstelle zugeordnet. Dies ermöglicht eine besonders einfache Konstruktion des Kopplungselementes. Beispielsweise können zwei unterschiedliche Aufnahmen für ein fahrzeugseitiges Sperrelement an dem Kopplungselement vorgesehen sein, die axial voneinander beabstandet sind.

Gemäß einer weiteren vorteilhaften Ausgestaltung der Erfindung ist ein Ruhighalter vorgesehen, der das Kopplungselement in Richtung hin zu der Anlageebene beaufschlagt. Diese Ausgestaltung der Erfindung ermöglicht eine spielfreie, störende Geräusche unterdrückende Vorrichtung.

Gemäß einer weiteren vorteilhaften Ausgestaltung der Erfindung ist ein Ruhighalter vorgesehen, der das Kopplungselement im Wesentlichen feststellt. Als Ruhighalter wird eine Einrichtung, insbesondere eine Spannvorrichtung bezeichnet, die das Kopplungselement beständig gegen Anlageflächen beaufschlagt und auf diese Weise das Kopplungselement in unterschiedlichen Positionen spielfrei festlegt. Der Ruhighalter kann beispielsweise im einfachsten Falle eine Außenseite des Kopplungselementes kontaktieren und dieses unmittelbar gegen entsprechende Anlageflächen beaufschlagen. Es kann aber auch vorgesehen sein, dass der Ruhighalter von einem Sperrelement gebildet ist, welches das Kopplungselement in eine erste Richtung beaufschlagt, wobei Steuerflächen vorgesehen sind, die für eine Richtungsänderung sorgen, so dass das Kopplungselement entlang der geänderten Richtung gegen Anlageflächen beaufschlagt wird.

Gemäß einer weiteren vorteilhaften Ausgestaltung der Erfindung ist ein Sperrelement, insbesondere eine Sperrklinke, vorgesehen, die mit dem Kopplungselement kooperiert. Das Sperrelement sorgt auf einfache Weise dafür, dass das Kopplungselement in zwei unterschiedlichen Axialpositionen, die den unterschiedlichen Neigungspositionen der Lehne entsprechen, fahrzeugseitig arretiert ist. Vorteilhafterweise ist das Sperrelement von einem Betätigungselement betätigbar. Das Betätigungselement kann dabei lehnenseitig oder fahrzeugseitig angeordnet sein. Vorzugsweise ist das Betätigungselement fahrzeugseitig angeordnet. Auch das Sperrelement ist vorzugsweise fahrzeugseitig angeordnet.

Gemäß einer weiteren vorteilhaften Ausgestaltung der Erfindung sind an dem Kopplungselement Aufnahmen für das Sperrelement angeordnet. Dies ermöglicht eine besonders einfache Ausgestaltung des Kopplungselementes, da die Aufnahmen beispielsweise als randseitige Nuten in das Kopplungselement eingearbeitet sein können.

Gemäß einer weiteren vorteilhaften Ausgestaltung der Erfindung ist das Sperrelement fahrzeugseitig angeordnet. Dies ermöglicht eine besonders sichere und stabile Konstruktion.

Gemäß einer weiteren vorteilhaften Ausgestaltung der Erfindung ist das Sperrelement in seine Sperrstellung hinein federbelastet. Dies ermöglicht eine Ausbildung des Sperrelementes als Ruhighalter.

Gemäß einer weiteren vorteilhaften Ausgestaltung der Erfindung ist das Sperrelement als Ruhighalter ausgebildet. Dies ermöglicht eine besonders einfache Bauweise.

Gemäß einer weiteren vorteilhaften Ausgestaltung der Erfindung ist der Befestigungsstelle eine Käfiganordnung für das Kopplungselement zugeordnet. Die Käfiganordnung ermöglicht eine besonders einfache Begrenzung der Freiheitsgrade für das Kopplungselement relativ zu der fahrzeugseitig fest angeordneten Befestigungsstelle bei besonders einfacher Bauweise.

Weitere Vorteile der Erfindung ergeben sich aus den nicht zitierten Unteransprüchen sowie anhand der nun folgenden Beschreibung mehrerer in den Zeichnungen dargestellter Ausführungsbeispiele. Darin zeigen:
- Fig. 1: in schematischer Darstellung das Funktionsprinzip der erfindungsgemäßen Vorrichtung,
- Fig.2: ein erstes Ausführungsbeispiel der erfindungsgemäßen Vorrichtung in schematischer Draufsicht,
- Fig. 3: das Ausführungsbeispiel der Fig. 2 in Schnittdarstellung etwa gemäß Schnittlinie III-III in Fig. 2, wobei das lehnenseitige Schloss der Übersichtlichkeit halber weggelassen worden ist,
- Fig. 4: das Ausführungsbeispiel der Fig. 3 mit in einer Zwischenposition befindlichem Kopplungselement während einer Verschwenkung der Lehne von ihrer Komfortposition in ihre Cargo-Position,
- Fig. 5: das Kopplungselement gemäß Fig. 4 bei in Cargo-Position befindlicher Lehne,
- Fig. 6: ein zweites Ausführungsbeispiel der erfindungsgemäßen Vorrichtung, bei der die fahrzeugseitige Befestigungsstelle eine alternative Käfiganordnung aufweist, in einer Darstellung gemäß Fig. 2,
- Fig. 7: die Vorrichtung gemäß Fig. 6 in einer Seitenansicht etwa gemäß Ansichtspfeil VII in Fig. 6,
- Fig. 8: die Vorrichtung gemäß Fig. 7 im Querschnitt etwa gemäß Schnittlinie VIII-VIII in Fig. 7,
- Fig. 9: die Vorrichtung gemäß Fig. 7 im Querschnitt etwa entlang Schnittlinie IX-IX in Fig. 7, und
- Fig. 10: die Vorrichtung gemäß Fig. 7 im Querschnitt etwa entlang Schnittlinie X-X in Fig. 7.

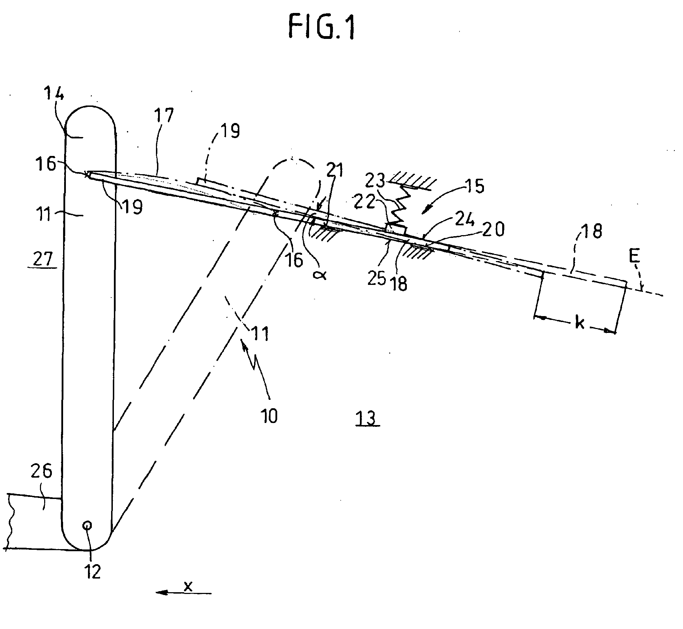

Die in ihrer Gesamtheit in den Figuren mit 10 bezeichnete Vorrichtung soll zunächst lediglich schematisch anhand der Prinzipskizze der Fig. 1 erläutert werden. Anzumerken ist, dass gleiche oder vergleichbare Teile oder Elemente der Vorrichtung bei den unterschiedlichen Ausführungsbeispielen der Einfachheit und der Übersichtlichkeit halber mit gleichen Bezugszeichen, teilweise unter Hinzufügung kleiner Buchstaben bezeichnet werden.

Fig. 1 zeigt eine um eine fahrzeugseitig feste Schwenkachse 12 verschwenkbare Lehne 11 eines Fond-Sitzes eines in Fahrtrichtung x beweglichen Kraftfahrzeuges. Die Lehne 11 ist in ihrer Komfortposition gestrichelt und in ihrer Cargo-Position in durchgezogenen Linien dargestellt. In der Komfortposition ist die Lehne 11 entgegen der Fahrtrichtung x nach hinten geringfügig geneigt, so dass auf dem Sitzpolster 26 der Fahrgastzelle 27 ein nicht dargestellter Fahrgast Platz nehmen kann und sich mit seinem Rücken an die Lehne 11 anlehnen kann.

Insbesondere bei kleineren Fahrzeugen ist es gewünscht, den in Fahrtrichtung x hinter der Lehne 11 befindlichen Laderaum 13 bei Bedarf dadurch zu vergrößern, dass die Lehne 11 in Fahrtrichtung x nach vorne, also entgegen dem Uhrzeigersinn um ihre Schwenkachse 12 verschwenkt wird. Diese Lehnenneigungslage wird deshalb als Cargo-Position bezeichnet.

In beiden Lehnenpositionen, also sowohl in der Komfortposition als auch in der Cargo-Position, soll die Lehne 11 mit einer fahrzeugseitig fest angeordneten Befestigungsstelle 15 verbunden werden. Schematisch deutet die Fig. 1 dabei einen lehnenseitigen Befestigungspunkt 16 an, der sich im Bereich des Lehnenkopfes 14 befindet. Tatsächlich kann der lehnenseitige Befestigungspunkt 16 aber auch näher an der Schwenkachse 12 angeordnet werden oder weiter von der Schwenkachse 12 entfernt sein.

Infolge einer Verlagerungsbewegung der Lehne 11 durchläuft der lehnenseitig feste Befestigungspunkt 16 eine Kreisbahn 17. Ein an dem Befestigungspunkt 16 angreifendes Kopplungselement 18 muss daher mit seinem ersten Ende 19, also mit dem bezüglich Fig. 1 linken Ende, mit dem es mit dem lehnenseitigen Befestigungspunkt 16 verbunden ist, ebenfalls dem Verlauf der Kreisbahn 17 folgen können. Sowohl in der Komfortposition als auch in der Cargo-Position der Lehne 11 muss das Kopplungselement allerdings relativ zu der fahrzeugseitig fest angeordneten Befestigungsstelle 15 festlegbar sein, um den Befestigungspunkt 16 mit der fahrzeugseitigen Befestigungsstelle 15 fest verbinden zu können, um im Falles eines Crashs auf die Lehne 11 einwirkende Kräfte in die Karosserie einleiten zu können.

Das Kopplungselement 18 ist als im Wesentlichen langgestrecktes, einstückiges Element ausgebildet, welches zwischen einer in gestrichelten Linien dargestellten Ruheposition und einer in durchgezogenen Linien dargestellten Gebrauchsposition verlagerbar ist. Für den Fall, dass sich das Kopplungselement 18 in seiner Ruheposition befindet, ist das Kopplungselement 18 bezüglich Fig. 1 maximal nach rechts gerückt und für den Fall, dass sich das Kopplungselement 18 in seiner Gebrauchsposition oder Arbeitsposition befindet, ist es bezüglich Fig. 1 maximal nach links gerückt. Es liegt mit seiner Unterseite 25 sowohl in der Ruheposition als auch in der Gebrauchsposition auf zwei fahrzeugseitig fest angeordneten Anlageflächen 20 und 21 auf, die gemeinsam eine Anlageebene E definieren. Ein Ruhighalter 22 kontaktiert die Oberseite 24 des Kopplungselementes 18. Ein mit dem Ruhighalter 22 kooperierendes Druck-Federelement 23 beaufschlagt daher das Kopplungselement 18 gegen die beiden Anlageflächen 20, 21.

Ausgehend von einer Position, in der sich die Lehne 11 in ihrer Komfortposition befindet, ist das Kopplungselement 18 in seiner bezüglich Fig. 1 gestrichelt dargestellten Lage befindlich. Wird die Lehne 11 verschwenkt, ist eine Verlagerung des Kopplungselementes 18 entlang der Anlageflächen 20, 21, also entlang der Anlageebene E bezüglich Fig. 1 nach links möglich. Zugleich ist entgegen der Kraft des Federelementes 23 des Ruhighalters 22 aber auch eine Verkippung des Kopplungselementes 18 um den bezüglich Fig. 1 rechten Rand der ersten Anlagefläche 20 möglich. Das bezüglich Fig. 1 rechte Ende der Anlagefläche 20 bildet dabei einen Schwenkachsbereich oder Drehlagerbereich aus. Insgesamt wird ein Kippen des Kopplungselementes 18 um einen Winkelbereich a möglich, der die geometrischen Verhältnisse während der Verschwenkung der Lehne 11 berücksichtigt. Das Kopplungselement 18 ist maximal im Uhrzeigersinn verschwenkt worden, wenn sich die Lehne 11 in einer Zwischenposition befindet, die etwa auf halbem Wege zwischen der Komfortposition und der Cargo-Position liegt. In einer derartigen Zwischenposition ist das Kopplungselement 18 gestrichpunktet dargestellt und hat eine maximale Verkippung oder Verschwenkung erfahren und sich bezüglich Fig. 1, ausgehend von der Ruheposition des Kopplungselementes 18, bereits um einen Weg k nach links verlagert. Bei in Zwischenposition befindlichem Kopplungselement 18 hat sich dieses mit seiner Unterseite 25 von der zweiten Auflagefläche 21 gelöst.

Bei einer weiteren Verschwenkung erreicht die Lehne 11 schließlich ihre Cargo-Position, so dass das Kopplungselement 18 seine in Fig. 1 in durchgezogenen Linien dargestellte Gebrauchsposition einnehmen kann. In dieser Position liegt es mit seiner Unterseite 25 wiederum an beiden Anlageflächen 20, 21 an und ist somit im Wesentlichen entlang der Anlageebene E ausgerichtet.

Aufgrund der fliegenden Lagerung des Kopplungselementes 18, durch Bereitstellung eines Dreh-Gleitlagers durch die Anlageflächen 20, 21 und des Ruhighalters 22, ist eine sehr einfache und damit preiswerte Bauweise möglich. Es sei angemerkt, dass der Einfachheit halber das Sperrelement, welches vorzugsweise fahrzeugseitig fest angeordnet ist, und welches das Kopplungselement 18 in seiner Ruheposition beziehungsweise in seiner Gebrauchsposition fahrzeugseitig sichert, nicht dargestellt ist.

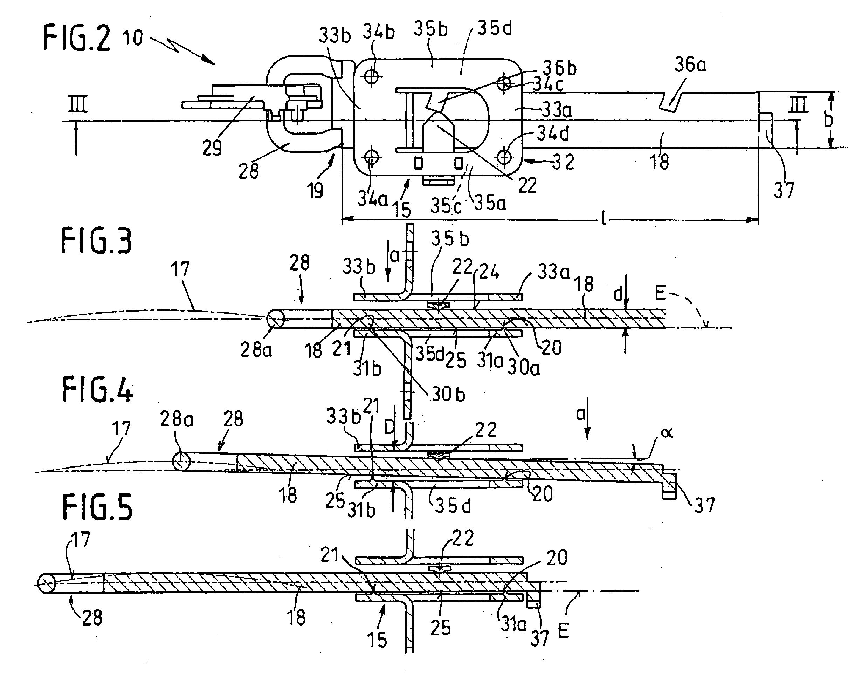

Fig. 2 zeigt das Kopplungselement 18 und die fahrzeugseitige Befestigungsstelle 15 in einer schematischen Draufsicht. Zunächst wird deutlich, dass das Kopplungselement 18 im Wesentlichen von einem Flacheisen der axialen Länge I und der Breite b gebildet ist. Das Flacheisen weist, wie sich beispielsweise aus Fig. 3 ergibt, die Dicke d auf.

An seinem bezüglich Fig. 2 linken, ersten Ende 19 ist ein Schließbügel 28 herkömmlicher Bauart angeordnet. Dieser kann mit dem Kopplungselement 18 beispielsweise verschweißt sein.

Mit dem Schließbügel 28 wirkt ein in Fig. 2 schematisch angedeutetes Sitzlehnenschloss 29 zusammen, welches im Bereich des Befestigungspunktes 16 der Lehne 11 gemäß Fig. 1 angeordnet ist. Das Sitzlehnenschloss 29 ist mittels eines nicht dargestellten Betätigungselementes öffenbar, so dass das Schloss 29 den Schließbügel 28 zur vollständigen Lösung der Lehne 11 von dem Kopplungselement 18 freigeben kann. Dies ist beispielsweise gewünscht, wenn die Lehne in ihre nicht dargestellte im Wesentlichen horizontale Ruheposition verlagert wird, in der sie auf dem in Fig. 1 nur abgebrochen dargestellten Sitzpolster 26 z.B. aufliegt.

Fig. 3 zeigt das Kopplungselement 18 in einer Ruheposition, in der es auf der ersten Anlagefläche 20 und auf der zweiten Anlagefläche 21 mit seiner Unterseite 25 aufliegt. Ein Ruhighalterelement 22 nach Art eines Niederhalters, welches von einer nicht dargestellten Feder in Beaufschlagungsrichtung a auf die Oberseite 24 des Kopplungselementes 18 drückt, sorgt für ein Anliegen der Unterseite 25 an den Anlageflächen 20, 21. Die Anlageflächen 20, 21 werden von zwei Rippen 30a, 30b gebildet, die auf Quertraversen 31 a, 31 b angeordnet sind. Die Quertraversen 31a, 31b sind Bestandteil einer fahrzeugseitig fest angeordneten Käfiganordnung 32, die das Kopplungselement 18 in Umfangsrichtung umgibt und für eine crashsichere Halterung sorgt. Die Käfiganordnung 32 weist zusätzlich noch zwei obere Quertraversen 33a, 33b auf. Jede obere Quertraverse 33a, 33b ist mit einer entsprechenden unteren Quertraverse 31a, 31b über Bolzenelemente 34a, 34b, 34c, 34d verbunden, die in den Figuren 3 bis 5 nicht dargestellt sind.

Aus Fig. 2 ergibt sich, dass darüber hinaus auch vier Längstraversen 35a, 35b, 35c, 35d vorgesehen sind, die jeweils zwei Quertraversen 33a, 33b, 31a, 31b miteinander verbinden. An der bezüglich Fig. 2 unteren Längstraverse 35a ist der Ruhighalter 22 angeordnet.

Schließlich lässt sich der Fig. 2 entnehmen, dass an dem Kopplungselement 18 zwei randseitige Aufnahmenuten 36a, 36b für ein nicht dargestelltes Sperrelement angeordnet sind. Das Sperrelement kann beispielsweise eine fahrzeugseitig fest angeordnete, vorteilhafterweise an der Käfiganordnung 32 fest angeordnete Sperrklinke sein, die in die Aufnahmenut 36a, 36b einfallen kann. Die nicht dargestellte Sperrklinke kann vorzugsweise um eine mit dem Bolzen 34b zusammenfallende Schwenkachse schwenkbar sein, wobei deutlich wird, dass die Seitenwände der Aufnahmenuten 36a, 36b dem Verlauf eines Kreisbogens um die Schwenkachse 34b folgen.

Für den Fall, dass sich das Kopplungselement 18 in seiner Ruheposition gemäß Fig. 3 befindet, kontaktiert die nicht dargestellte Sperrklinke die Aufnahmenut 36b und sichert in dieser Position das Kopplungselement 18 an der fahrzeugseitigen Befestigungsstelle 15, 32.

Für den Fall, dass die Lehne aus ihrer Komfortposition verschwenkt werden soll, muss das Sperrelement mittels eines Betätigungselementes betätigt und in seine Freigabestellung verlagert werden, so dass das Kopplungselement 18 relativ zu dem fahrzeugseitig fest angeordneten Käfig 32 verlagerbar ist. Hierbei wird der Schließbügelschenkel 28a des Schließbügels 28 der Kreisbahn 17 folgen und etwa nach der Hälfte des Verlagerungsweges eine Zwischenposition gemäß Fig. 4 erreichen. Es wird deutlich, dass sich die Unterseite 25 des Kopplungselementes 18 von der zweiten Anschlagfläche 21 entfernt hat, da das Kopplungselement 18 um einen Winkel α im Uhrzeigersinn um die erste Anlagefläche 20 verkippt ist. Dies ist möglich, da der Abstand D zwischen der oberen Quertraverse 33b und der unteren Quertraverse 31 b größer ist als die Wandstärke d des Kopplungselementes 18. Der Ruhighalter 22 kann gegen die Kraft der nicht dargestellten Feder ausgehend von einer Position Fig. 3 geringfügig entgegen der Beaufschlagungsrichtung a verlagert werden. Zugleich kann das Kopplungselement 18 relativ zu der feststehenden Käfiganordnung 32 bezüglich Fig. 3 nach links verlagert werden.

Die Käfiganordnung 32 mit ihren oberen Quertraversen 33a, 33b, ihren unteren Quertraversen 31a, 31b und den Bolzenelementen 34a, 34b, 34c, 34d stellt somit ein Dreh-Gleitlager für das Kopplungselement 18 bereit, welches eine Axialverlagerung des Kopplungselementes 18 und eine Schwenkbarkeit innerhalb eines bestimmten Schwenkwinkels ermöglicht.

Fig. 5 zeigt schließlich die Gebrauchsposition des Kopplungselementes 18, welche einer Cargo-Position der Lehne 11 entspricht. Die Unterseite 25 des Kopplungselementes 18 liegt auf der ersten Anlagefläche 20 und auf der zweiten Anlagefläche 21 auf, so dass die Unterseite 25 entlang der Anlageebene E ausgerichtet ist. Der Ruhighalter 22 befindet sich gemäß Fig. 5 in der gleichen Position, in der er sich in der Ruheposition des Kopplungselementes 18 gemäß Fig. 3 befunden hat. Das Kopplungselement 18 ist nunmehr bezüglich der fahrzeugseitig feststehenden Befestigungsstelle 15 maximal nach links verfahren, so dass ein am bezüglich Fig. 5 rechten Ende des Kopplungselementes 18 angeordnetes Anschlagelement 37 in den Bereich der unteren Quertraverse 31a gelangt. Das Anschlagelement 37 sorgt für eine unverlierbare Halterung des Kopplungselementes 18 an der Käfiganordnung 32 für den Fall, dass sich das nicht dargestellte Sperrelement in seiner Freigabeposition befindet. Ergänzend sei angemerkt, dass das Anschlagelement 37 in Fig. 3 der Übersichtlichkeit halber nicht dargestellt ist.

In der Position des Kopplungselement 18 gemäß Fig. 5 kontaktiert das nicht dargestellte Sperrelement die Rastausnehmung 36a des Kopplungselementes 18 und sorgt auf diese Weise für eine sichere Befestigung und Halterung des Kopplungselementes 18 an der fahrzeugseitigen Käfiganordnung 32.

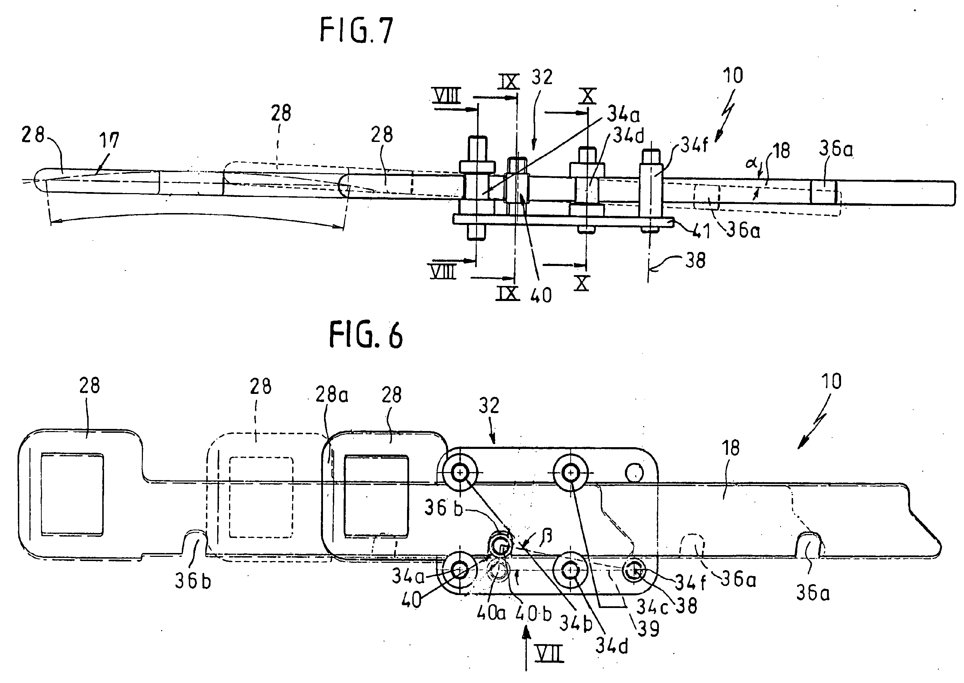

Die Figuren 6 bis 10 zeigen ein weiteres Ausführungsbeispiel der erfindungsgemäßen Vorrichtung 10, bei der das Kopplungselement 18 wiederum als Flacheisen ausgebildet ist. Fig. 6 zeigt das Kopplungselement 18 in durchgezogenen Linien größerer Linienstärke in seiner Ruheposition entsprechend einer Komfortposition der Lehne, in gestrichelten Linien in einer Zwischenposition, und in dünneren, durchgezogenen Linien in einer Gebrauchsposition des Kopplungselementes 18, also bezüglich Fig. 6 ganz links, die einer Cargo-Position der Lehne 11 entspricht.

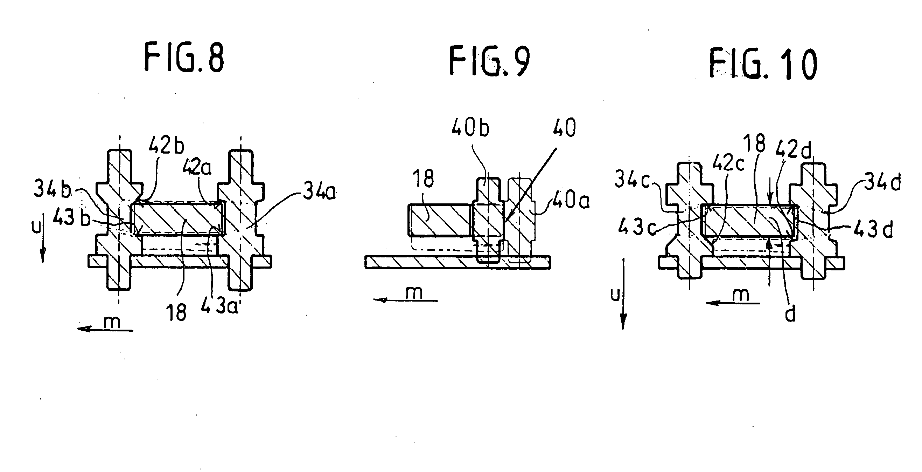

Das Kopplungselement 18 weist wiederum zwei Aufnahmenuten 36a, 36b auf, die mit einer um einen Winkel β um eine Schwenkachse 38 verschwenkbaren Sperrklinke 39 zusammenwirken. Die Sperrklinke 39 ist in Fig. 6 lediglich angedeutet und weist an ihrem freien, von der Schwenkachse 38 entfernten Ende einen Verriegelungsbolzen 40 auf. Dieser ist in Fig. 6 in dicken Linien in seiner Sperrstellung dargestellt, in der er in die Aufnahmenut 36b eingefallen ist. Zugleich zeigt Fig. 6 den Bolzen 40 in dünneren Linien in seiner Freigabeposition, in der er das Kopplungselement 18 freigibt. Der Übersichtlichkeit halber ist die Verriegelungsposition des Verriegelungsbolzens 40 mit 40b, und dessen Freigabeposition mit 40a bezeichnet. Eine vergleichbare und die Verlagerungsposition des Verriegelungsbolzens 40 verdeutlichende Darstellung zeigt auch Fig. 9.

Die fahrzeugseitig fest angeordnete Käfiganordnung 32 umfasst bei diesem Ausführungsbeispiel wiederum eine Reihe von Bolzen 34a, 34b, 34c, 34d, 34f, die auf einer unteren Gehäuseplatte 41 angeordnet sind. Eine nicht dargestellte zusätzliche, obere Gehäuseplatte kann selbstverständlich nach Art des Ausführungsbeispieles der Figuren 2 bis 5 ebenfalls vorgesehen sein.

Die Schwenkachse 38, um die die Sperrklinke 39 schwenkbar ist, fällt mit der Mittelachse des bezüglich Fig. 6 rechten unteren Bolzens 34f zusammen.

Um die Lehne 11 verlagern zu können, muss die Sperrklinke 39 zunächst in ihre Freigabeposition, also in ihre bezüglich Fig. 6 untere Position verlagert werden. Dies geschieht mittels eines nicht dargestellten Betätigungselementes. Ergänzend sei angemerkt, dass die Sperrklinke 39 in ihre Sperrstellung hinein belastet ist. Ausgehend von Fig. 9 ist daher der Verriegelungsbolzen 40 in Verriegelungsrichtung m belastet.

Nachfolgend kann die Lehne 11 verschwenkt werden, so dass das Kopplungselement 18 aus der Käfiganordnung 32 gemäß den Figuren 6 und 7 nach links herausgezogen wird. In Analogie zu der Darstellung des Ausführungsbeispieles gemäß den Figuren 2 bis 5 folgt der Rahmenschenkel 28a des Schließbügels 28 einer Kreisbahn 17. Das Kopplungselement 18 durchläuft infolge einer Verschwenkung der Lehne 11 zunächst eine Zwischenposition, die in den Figuren 6 und 7 in gestrichelten Linien dargestellt ist, bevor die Cargo-Position der Lehne entsprechend einer in den Figuren 6 und 7 ganz links dargestellten Anordnung des Kopplungselementes 18 in seiner Gebrauchsposition erreicht ist.

Wie die Figuren 8 und 10 erkennen lassen, sind an den Bolzen 34a, 34b, 34c, 34d Steuerflächen 42a, 42b, 42c, 42d angeordnet. Diese sind jeweils durch eine konische Erweiterung des Bolzens 34a, 34b, 34c, 34d nach oben beziehungsweise nach unten erreicht.

Befindet sich das Kopplungselement 18 in seiner Ruheposition oder in seiner Gebrauchsposition, ist die Sperrklinke 39 in ihre Sperrstellung hinein federbelastet. Der Verriegelungsbolzen 40 drängt somit in die jeweilige Aufnahmenut 36a beziehungsweise 36b hinein, dem Grund der jeweiligen Aufnahmenut entgegen. Die Aufnahmenut 36a, 36b ist vorzugsweise geringfügig konisch ausgebildet und derart auf den Verriegelungsbolzen abgestimmt, dass der Verriegelungsbolzen den Grund der Aufnahmenut 36a, 36b nicht erreichen kann. Demzufolge spannt der in seiner Verriegelungsposition 40b befindliche Verriegelungsbolzen 40 das Kopplungselement 18 bezüglich Fig. 9 in Spannrichtung m, also bezüglich Fig. 9 nach links.

Bei Betrachtung der Fig. 8 wird deutlich, dass die Sperrklinke 39 auf diese Weise das Kopplungselement 18 gegen die Steuerfläche 42b des Bolzens 34b drückt. Aufgrund der Konizität fährt das Kopplungselement 18 diese Steuerfläche 42b entlang, so dass es eine Verspannbewegung in Verlagerungsrichtung u erfährt. Zugleich wird das Kopplungselement 18 in Richtung des Pfeiles m gegen die Steuerfläche 42c des Bolzens 34c beaufschlagt, so dass das Kopplungselement 18 im Bereich des Axialabschnittes der Fig. 10 entgegen der Richtung des Pfeiles u beaufschlagt wird. Das Kopplungselement 18 wird auf diese Weise durch die Sperrklinke 39 spielfrei ruhiggestellt, so dass Klappergeräusche vermieden werden können. Die Sperrklinke 39 übernimmt auf diese Weise die Funktion des Ruhighalters gemäß dem Ausführungsbeispiel der Figuren 2 bis 5 und positioniert das Kopplungselement 18 entlang einer Anlageebene. Die Anlageebene wird dabei einerseits durch die bezüglich Fig. 7 linken, unteren Auflageflächen 43a und 43b sowie andererseits durch die bezüglich Fig. 7 rechten Auflageflächen 43c und 43d definiert. Da die Auflageflächen 43a, 43b von den Auflageflächen 43c, 43d um einen Abstand voneinander beabstandet sind, der geringfügig größer ist als die Dicke d des Kopplungselementes 18, kann sich das Kopplungselement 18 mit seiner Unterseite an die Auflageflächen 43a, 43b und mit seiner Oberseite an die Auflageflächen 43c, 43d anlegen, wobei es eine Verkippung erfährt.

Auf diese Weise kommt es zu einer spielfreien Ruhigstellung des Kopplungselementes 18 entlang der Anlageebene E. Anzumerken ist in diesem Zusammenhang, dass die Anlageebene E bei ruhig gestelltem Kopplungselement 18 leicht schräg durch das Kopplungselement 18 hindurch verläuft, dieses also schneidet.

Weiterhin ist anzumerken, dass bei einer mikroskopischen Betrachtung die Anlageebene einem zur spielfreien Ruhigstellung des Kopplungselementes erforderlichen geringen Winkelspiel unterliegt.

Ergänzend ist darauf hinzuweisen, dass das in den Figuren nicht dargestellte Federelement, welches die Sperrklinke 39 in ihre Sperrstellung hinein beaufschlagt, selbstverständlich ausreichend dimensioniert werden muss.

Ergänzend ist anzumerken, dass die Auflageflächen 43a, 43b, 43c, 43d bei dem Ausführungsbeispiel der Figuren 6 bis 10 zugleich die Funktion der Auflageflächen 20, 21 des ersten Ausführungsbeispieles der Figuren 2 bis 5 übernehmen.

Der Vollständigkeit halber sei darauf hingewiesen, dass das Kopplungselement 18 auf seiner Außenseite zumindest teilweise auch eine Verkleidung aus einem nichtmetallischen Werkstoff aufweisen kann, beispielsweise kunststoffumspritzt sein kann, um Klappergeräusche weiter zu vermindern und um die Gleiteigenschaften des Kopplungselementes 18 relativ zu den käfiganordnungseitigen Gleitflächen, also beispielsweise den Anlageflächen 20, 21 sowie den Auflageflächen 43a, 43b, 43c, 43d zu verbessern.

Schließlich sei angemerkt, dass anstelle einer Käfiganordnung 32, die mehrere Bolzen 34a, 34b, 34c und 34d umfasst, alternativ auch eine Beschränkung der Freiheitsgrade des Kopplungselementes 18 durch eine geänderte Käfiganordnung möglich ist. So können beispielsweise die relativ kostspieligen Bolzen durch Blechabschnitte ersetzt werden, die die Funktion der Bolzen 34a, 34b, 34c, 34d, 34f übernehmen. Die zuvor erläuterten Steuerflächen 42a, 42b, 42c, 42d können dann entsprechend an den Blechabschnitten angebracht sein.

## Patentansprüche

1. Vorrichtung (10) zur Halterung einer Lehne (11) eines Fahrzeugsitzes, insbesondere einer Kfz-Fondlehne, in wenigstens zwei unterschiedlichen Neigungspositionen, umfassend ein Kopplungselement (18), welches die Lehne (11) mit einer fahrzeugseitigen Befestigungsstelle (15, 32) verbindet, wobei die Befestigungsstelle ein Dreh-Gleitlager für das Kopplungselement ausbildet, **dadurch gekennzeichnet, dass** die fahrzeugseitige Befestigungsstelle (15, 32) wenigstens eine erste Anlagefläche (20, 42d, 42c) und eine zweite Anlagefläche (21, 43a, 43b) aufweist, die gemeinsam eine Anlageebene (E) für das Kopplungselement bereitstellen, wobei das Kopplungselement (18) in Folge einer Verschwenkung der Lehne entlang der Anlageebene (E) verlagerbar und relativ zu der Anlageebene kippbar (Winkel α) ist.

2. Vorrichtung nach Anspruch 1, **dadurch gekennzeichnet, dass** das Kopplungselement (18) einstückig ausgebildet ist.

3. Vorrichtung nach Anspruch 1 oder 2, **dadurch gekennzeichnet, dass** das Kopplungselement (18) axial langgestreckt ausgebildet ist.

4. Vorrichtung nach einem der Ansprüche 1 bis 3, **dadurch gekennzeichnet, dass** das Kopplungselement (18) fahrzeugseitig fliegend gelagert ist.

5. Vorrichtung nach einem der vorgenannten Ansprüche, **dadurch gekennzeichnet, dass** das Kopplungselement (18) ein erstes, der Lehne zugewandtes Ende (19) aufweist, welches mit einem Schließelement (28), insbesondere mit einem Schließbügel ausgestaltet ist, welches mit einem lehnenseitigen Gegenschließelement (29) zusammenwirkt.

6. Vorrichtung nach Anspruch 5, **dadurch gekennzeichnet, dass** die Lehne eine erste Neigungsposition (Komfortposition) aufweist, in der das erste Ende des Kopplungselementes (18) der Befestigungsstelle (15, 32) näher ist als in einer zweiten Neigungsposition (Cargo-Position) der Lehne.

7. Vorrichtung nach einem der vorgenannten Ansprüche, **dadurch gekennzeichnet, dass** ein Ruhighalter (22, 39) für das Kopplungselement (18) vorgesehen ist, der das Kopplungselement im Wesentlichen feststellt.

8. Vorrichtung nach Anspruch 7, **dadurch gekennzeichnet, dass** der Ruhighalter (22, 39) das Kopplungselement (18) in Richtung (a) hin zu einer Anlageebene (E) beaufschlagt.

9. Vorrichtung nach einem der vorgenannten Ansprüche, **dadurch gekennzeichnet, dass** ein Sperrelement (39), insbesondere eine Sperrklinke, vorgesehen ist, die mit dem Kopplungselement (18) kooperiert.

10. Vorrichtung nach Anspruch 9, **dadurch gekennzeichnet, dass** an dem Kopplungselement (18) Aufnahmen (36a, 36b) für das Sperrelement angeordnet sind.

11. Vorrichtung nach Anspruch 9 oder 10, **dadurch gekennzeichnet, dass** das Sperrelement (39) fahrzeugseitig angeordnet ist.

12. Vorrichtung nach einem der Ansprüche 9 bis 11, **dadurch gekennzeichnet, dass** das Sperrelement (39) in seine Sperrstellung hinein federbelastet ist.

13. Vorrichtung nach einem der Ansprüche 9 bis 12, soweit dieser auf Anspruch 9 rückbezogen ist, **dadurch gekennzeichnet, dass** das Sperrelement (39) als Ruhighalter (22) ausgebildet ist.

14. Vorrichtung nach einem der vorgenannten Ansprüche, **dadurch gekennzeichnet, dass** der Befestigungsstelle (15) eine Käfiganordnung (32) für das Kopplungselement (18) zugeordnet ist.

15. Vorrichtung nach Anspruch 14, **dadurch gekennzeichnet, dass** die Käfiganordnung wenigstens vier Käfigstäbe (34a, 34b, 34c, 34d) aufweist.

16. Vorrichtung nach Anspruch 15, **dadurch gekennzeichnet, dass** der Käfiganordnung Steuerflächen (42a, 42b, 42c, 42d) zugeordnet sind.

## Claims

1. Device (10) for holding a backrest (11) of a vehicle seat, in particular a backrest of the back seat of a motor vehicle, in at least two different inclined positions, said device comprising a coupling element (18) which connects the backrest (11) to a fastening point (15, 32) on the vehicle, wherein said fastening point forms a pivot/sliding bearing for the coupling element, **characterised in that** the fastening point (15, 32) on the vehicle has at least one bearing face (20, 42d, 42c) and one second bearing face (21, 43a, 43b) which jointly provide a bearing plane (E) for the coupling element, wherein said coupling element (18) can be displaced along the bearing plane (E) as a consequence of pivoting of the backrest and can be tilted (angle α) relative to the bearing plane.

2. Device according to claim 1, **characterised in that** the coupling element (18) is of one-piece construction.

3. Device according to claim 1 or 2, **characterised in that** the coupling element (18) is constructed in an axially elongated manner.

4. Device according to one of claims 1 to 3, **characterised in that** the coupling element (18) is mounted in a floating manner on the vehicle.

5. Device according to one of the above claims, **characterised in that** the coupling element (18) has a first end (19) which faces towards the backrest and is configured with a closing element (28), in particular a closing hoop, which interacts with a counter-closing element (29) on the backrest.

6. Device according to claim 5, **characterised in that** the backrest has a first inclined position (comfort position) in which the first end of the coupling element (18) is closer to the fastening point (15, 32) than in a second inclined position (cargo position).

7. Device according to one of the above claims, **characterised in that** an immobiliser (22, 39) for the coupling element (18) is provided, which essentially arrests said coupling element.

8. Device according to claim 7, **characterised in that** the immobiliser (22, 39) loads the coupling element (18) in the direction (a) towards a bearing plane (E).

9. Device according to one of the above claims, **characterised in that** a locking element (39), in particular a locking catch, is provided, which cooperates with the coupling element (18).

10. Device according to claim 9, **characterised in that** receptacles (36a, 36b) for the locking element are arranged on the coupling element (18).

11. Device according to claim 9 or 10, **characterised in that** the locking element (39) is arranged on the vehicle.

12. Device according to one of claims 9 to 11, **characterised in that** the locking element (39) is spring-loaded into its locking position.

13. Device according to one of claims 9 to 12, where said claim refers back to claim 9, **characterised in that** the locking element (39) is constructed as an immobiliser (22).

14. Device according to one of the above claims, **characterised in that** a cage arrangement (32) for the coupling element (18) is associated with the fastening point (15).

15. Device according to claim 14, **characterised in that** the cage arrangement has at least four cage bars (34a, 34b, 34c, 34d).

16. Device according to claim 15, **characterised in that** control faces (42a, 42b, 42c, 42d) are associated with the cage arrangement.

## Revendications

1. Dispositif (10) pour maintenir un dossier (11) d'un siège de véhicule automobile, en particulier un dossier arrière de siège automobile, en au moins deux positions d'inclinaison différentes, comprenant un élément d'accouplement (18), qui relie le dossier (11) à un emplacement de fixation (15, 32) situé côté véhicule, l'emplacement de fixation constituant un palier de rotation à glissement pour l'élément d'accouplement, **caractérisé en ce que** l'emplacement de fixation (15, 32) situé côté véhicule présente au moins une première face d'appui (20, 42d, 42c) et une deuxième face d'appui (21, 43a, 43b), fournissant conjointement un plan d'appui (E) pour l'élément d'accouplement, l'élément d'accouplement (18) étant déplaçable le long du plan d'appui (E), par suite d'un pivotement du dossier, et étant susceptible de basculer (angle α) par rapport au plan d'appui.

2. Dispositif selon la revendication 1, **caractérisé en ce que** l'élément d'accouplement (18) est réalisé d'une seule pièce.

3. Dispositif selon la revendication 1 ou 2, **caractérisé en ce que** l'élément d'accouplement (18) est de configuration allongée axialement.

4. Dispositif selon l'une quelconque des revendications 1 à 3, **caractérisé en ce que** l'élément d'accouplement (18) est monté flottant côté véhicule.

5. Dispositif selon l'une quelconque des revendications précédentes, **caractérisé en ce que** l'élément d'accouplement (18) présente une première extrémité (19), tournée vers le dossier, configurée avec un élément de fermeture (28), en particulier un arceau de fermeture, coopérant avec un élément de fermeture conjugué (29) situé côté dossier.

6. Dispositif selon la revendication 5, **caractérisé en ce que** le dossier présente une première position d'inclinaison (position de confort), dans laquelle la première extrémité de l'élément d'accouplement (18) de l'emplacement de fixation (15, 32) est plus proche que dans une deuxième position d'inclinaison (position de chargement) du dossier.

7. Dispositif selon l'une quelconque des revendications précédentes, **caractérisé en ce qu'**un organe de maintien immobile (22, 39), fixant pratiquement complètement l'élément d'accouplement (18), est prévu pour l'élément d'accouplement.

8. Dispositif selon la revendication 7, **caractérisé en ce que** l'organe de maintien immobile (22, 39) sollicite l'élément d'accouplement (18) dans le sens (a) allant à un plan d'appui (E).

9. Dispositif selon l'une quelconque des revendications précédentes, **caractérisé en ce qu'**un élément de blocage (39), en particulier un cliquet de blocage, coopérant avec l'élément d'accouplement (18), est prévu.

10. Dispositif selon la revendication 9, **caractérisé en ce que** des logements (36a, 36b) pour l'élément de blocage sont prévus sur l'élément d'accouplement (18).

11. Dispositif selon la revendication 9 ou 10, **caractérisé en ce que** l'élément de blocage (39) est disposé côté véhicule.

12. Dispositif selon l'une des revendications 9 à 11, **caractérisé en ce que** élément de blocage (39) est sollicité de manière à pénétrer dans sa position de blocage.

13. Dispositif selon l'une des revendications 9 à 12, dans la mesure où celle-ci se réfère à la revendication 9, **caractérisé en ce que** l'élément de blocage (39) est réalisé sous forme d'organe de maintien immobile (22).

14. Dispositif selon l'une des revendications précédentes, **caractérisé en ce que** l'emplacement de fixation (15) est associé à un ensemble cage (32) pour l'élément d'accouplement (18).

15. Dispositif selon la revendication 14, **caractérisé en ce que** l'ensemble cage présente au moins quatre barreaux de cage (34a, 34b, 34c, 34d).

16. Dispositif selon la revendication 15, **caractérisé en ce que** des faces de commande (42a, 42b, 42c, 42d) sont associées à l'ensemble cage.
